# EUROPEAN PATENT APPLICATION

(11) **EP 2 869 246 A1**
(43) Date of publication of application: **06.05.2015**
(21) Application number: 13870394.7
(22) Date of filing: 06.09.2013
(51) Int. Cl.: G06Q 10/00, G06Q 10/10

(54) **RECORD DATA MANAGEMENT SERVER AND RECORD DATA MANAGEMENT PROGRAM**

(71) Applicant: ISP Co., Ltd., Osaka-shi Osaka 5300011 (JP)
(72) Inventor: AKITA, Toshifumi, Osaka-shi Osaka 530-0011 (JP)
(74) Representative: Grünecker Patent- und Rechtsanwälte PartG mbB
(86) International application number: PCT/JP2013/005299
(87) International publication number: WO 2015/033376

(57) **Abstract**

In a business system (ERP system) providing information related to reports, data desired by a user is provided by a simple process.

A report data management server 10 generates retrieval target period of time designation screen information representing a retrieval target period of time designation screen which is provided with a report data-related information display region formed by a plurality of specific period of time regions divided in units of specific period of times, wherein report data-related information related to report data to which a certain item is set in a corresponding specific period of time is displayed on the plurality of specific period of time regions, receives a retrieval target period of time from a user terminal 31, retrieves report data in the retrieval target period of time, and provides a retrieval result to the user terminal 31.

## Description

### Technical Field

The present invention relates to a report data management server on which an enterprise resource planning (ERP) runs and provides various kinds of data via a communication network according to a request from a user terminal used by a user, and a report data management program installed in the report data management server.

### Background Art

Heretofore, one so-called ERP (Enterprise Resource Planning) has become mainstream as package software for establishing a core business system for a company. In a core business system in which this ERP is contained (an integrated core business system, an ERP system), it is most often constructed on a relational database, and design of an application program that focuses on business processes is mostly made. Thus, it is often operated without focusing on report output.

For the purpose of processing the large amount of business data at a high speed, analyzing the business data from various angles, and outputting reports under such a situation, various data warehouse systems that undertake a complementary role to the core business system have been provided (see Patent Literature 1).

### Citation List

### Patent Literature

Patent Literature 1: JP 2002-312208 A

### Summary of Invention

### Technical Problem

In such systems that manage information about a report or the like, since various kinds of reports are managed and a huge amount of report data is managed, enabling the system to provide data desired by a user by a simple process in which a complicated selection operation is not required has been a significant issue.

In order to solve the above problems, it is an object of the present invention to provide data desired by a user by a simple process in a business system (ERP system) providing information related to reports.

### Solution to Problem

A report data management server according to the present invention is a server on which enterprise resource planning (ERP) runs and provides a user terminal used by a user with report data generated for each business unit in a business process via a communication network according to a request from the user terminal, and includes a report data storage unit that stores report data, a retrieval target period of time designation screen information generating unit that generates retrieval target period of time designation screen information representing a retrieval target period of time designation screen used to designate a retrieval target period of time according to a request from the user terminal, a retrieval target period of time designation screen providing unit that provides the retrieval target period of time designation screen represented by the retrieval target period of time designation screen information, a retrieval target period of time receiving unit that receives and accepts a retrieval target period of time designated through the retrieval target period of time designation screen from the user terminal, and a retrieval result providing unit that provides the user terminal with report data within a period of time represented by the retrieval target period of time received by the retrieval target period of time receiving unit as a retrieval result, wherein the retrieval target period of time designation screen is provided with a report data-related information display region formed by a plurality of specific period of time regions divided in units of specific period of times, and report data-related information related to report data to which a certain item is set in a corresponding specific period of time is displayed on the plurality of specific period of time regions, and the retrieval target period of time designation screen information generating unit specifies the report data-related information with reference to the report data storage unit, and generates the retrieval target period of time designation screen information representing the retrieval target period of time designation screen on which each specified report data-related information is displayed on each specific period of time region.

Through the above configuration, it is possible to provide data desired by a user by a simple process in a business system (ERP system) providing information related to reports.

The report data management server may further include a report data retrieving unit that retrieves report data within a period of time represented by the retrieval target period of time received by the retrieval target period of time receiving unit with reference to the report data storage unit, and the retrieval result providing unit may provide the user terminal with report data retrieved by the report data retrieving unit as a retrieval result.

The retrieval target period of time designation screen may be provided with a display period of time unit selection region used to select a display period of time unit of the report data-related information display region, and the retrieval target period of time designation screen information generating unit may specify report data-related information according to a selected display period of time unit with reference to the report data storage unit as the display period of time unit is selected through the retrieval target period of time designation screen, and newly generate retrieval target period of time designation screen information including the report data-related information display region of the selected display period of time unit.

The report data-related information may be decided according to a display period of time unit, and be information representing the presence or absence of report data to which a certain item is set in each specific period of time, information representing an aggregate result of report data to which a certain item is set in each specific period of time, or information representing at least some items of report data to which a certain item is set in each specific period of time.

The report data-related information display region may be decided according to a display period of time unit, and be a display region of a calendar form configured with a calendar corresponding to a certain number of months or a display region on which report data-related information corresponding to a certain number of dates is displayed, and the specific period of time region may be decided according to a display period of time unit, and be a square corresponding to each date in a calendar or a square corresponding to each certain unit period of time.

Further, a report data management program according to the present invention is a report data management program that operates enterprise resource planning (ERP) and causes a report data management server to execute a process of providing report data generated for each business unit in a business process via a communication network according to a request from a user terminal used by a user, and causes the report data management server including a report data storage unit storing the report data to execute a retrieval target period of time designation screen information generating process of generating retrieval target period of time designation screen information representing a retrieval target period of time designation screen used to designate a retrieval target period of time according to a request from the user terminal, a retrieval target period of time designation screen providing process of providing the retrieval target period of time designation screen represented by the retrieval target period of time designation screen information, a retrieval target period of time receiving process of receiving and accepting a retrieval target period of time designated through the retrieval target period of time designation screen from the user terminal, and a retrieval result providing process of providing the user terminal with report data within a period of time represented by the retrieval target period of time received by the retrieval target period of time receiving unit as a retrieval result, wherein the retrieval target period of time designation screen is provided with a report data-related information display region formed by a plurality of specific period of time regions divided in units of specific period of times, and report data-related information related to report data to which a certain item is set in a corresponding specific period of time is displayed on each specific period of time region, and the retrieval target period of time designation screen information generating process includes a process of specifying the report data-related information with reference to the report data storage unit and generating the retrieval target period of time designation screen information representing the retrieval target period of time designation screen on which each specified report data-related information is displayed on each specific period of time region.

### Advantageous Effects of Invention

According to the present invention, it is possible to provide data desired by a user by a simple process in a business system (ERP system) which provides information related to reports.

### Brief Description of Drawings

Fig. 1 is a block diagram illustrating an exemplary configuration of a report inquiry system.
Fig. 2 is a block diagram illustrating an exemplary configuration of a report data management server.
Fig. 3 is a flowchart illustrating an exemplary slip data provision process.
Fig. 4 is an explanatory diagram illustrating an exemplary menu screen.
Fig. 5 is an explanatory diagram illustrating an exemplary slip retrieval screen.
Fig. 6 is a flowchart illustrating an exemplary retrieval condition reception process.
Fig. 7 is an explanatory diagram illustrating an exemplary slip retrieval screen.
Fig. 8 is a flowchart illustrating an exemplary calendar-related process.
Fig. 9 is an explanatory diagram illustrating an exemplary calendar screen.
Fig. 10 is an explanatory diagram illustrating another exemplary calendar screen.
Fig. 11 is an explanatory diagram illustrating another exemplary calendar screen.
Fig. 12 is an explanatory diagram illustrating another exemplary calendar screen.
Fig. 13 is an explanatory diagram illustrating an exemplary list display screen.

### Description of Embodiments

Hereinafter, an exemplary embodiment of the present invention will be described with reference to the drawings.

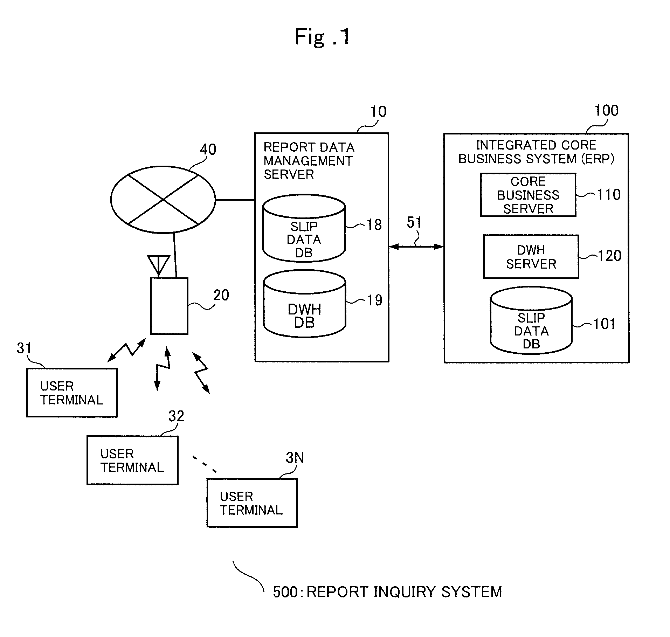

Fig. 1 is a block diagram illustrating an exemplary configuration of a report inquiry system 500 according to an embodiment of the present invention. The report inquiry system 500 includes a report data management server 10, a relay 20, a plurality of user terminals 31 to 3N (N is an arbitrary positive integer), and an integrated core business system 100 as illustrated in Fig. 1.

The report data management server 10 is connected with the user terminals 31 to 3N via a communication network 40 such as the Internet and the relay 20. The report data management server 10 is connected with the integrated core business system 100 via a communication network 51 such as a local area network (LAN) or a dedicated communication line. The user terminals may be configured to be able to perform communication with each other via the report data management server or may be configured to be unable to perform communication with each other.

The integrated core business system 100 includes a core business server 110, a data warehouse server (DWH server) 120, and a slip data DB 101.

The integrated core business system 100 functions as an integrated core business system by performing communication (transmission and reception of various kinds of information) with the report data management server 10 as necessary. A known technique is used for the core business server 110 or the like equipped in the core business system 100.

The core business server 110 is assumed to be connected with the DWH server 120 via a dedicated communication line.

For example, the core business server 110 is a server managed by an administrator of the report inquiry system 500, and has various kinds of functions for managing report information related to various kinds of businesses (for example, for creating, updating, or storing information). The core business server 110 is configured with a general information processing apparatus including an operating system (OS) and a relational DB.

Here, a "report" is a general term of books or a type of slip. Further, "books" denote ones in which matters concerning purse of money or goods are filled, and a "slip" denotes one which is basis data used to create books and constitutes evidence of transactions and the like on a business. The present embodiment will be described in connection with an example in which the core business server 110 deals with only slip data as report data.

The core business server 110 executes various kinds of processing according to a business application program. Examples of the business application program include a sales business management program, a purchase business manages program, a production management program, a financial accounting management program, and a managerial accounting management program.

For example, the DWH server 120 is a server managed by the system administrator of the present system, and includes various functions of implementing a data warehouse. Here, a "data warehouse" denotes a system that analyzes relevance between respective items from among business data chronologically accumulated such as report data. Further, the DWH server 120 has a function of converting a file of a comma separated values (CSV) format transferred from the core business server 110 into a predetermined data format and registering various kinds of data to a predetermined storage region. Further, the DWH server 120 may be configured to extract data corresponding to each storage region from a state of a CSV format without carrying out data format conversion.

The slip data DB 101 is a storage medium storing various kinds of report data which are collected and marshaled by means of various kinds of information processing using various kinds of business application programs (programs stored in a business application program DB (not illustrated) equipped in the integrated core business system 100). For example, the slip data DB 101 stores received order slip header information, received order slip description information, delivery date schedules, and the like in association with slip data corresponding to a received order slip and has a structure which is retrievable based on a key such as a slip number or the like.

Further, the core business server 110 has a function of converting various kinds of data stored in the slip data DB 101 into a CSV format according to a certain extraction condition and transmitting the converted data to the report data management server 10. In the present embodiment, the core business server 110 transfers a data file of a CSV format to the report data management server 10 via a file transfer protocol (FTP).

The report data management server 10 is a server which is run by the ERP and provides various kinds of data via a communication network according to a request from the user terminals 31 to 3N used by the user. For example, the report data management server 10 is configured with an information processing apparatus such as a WWW server and managed by a system administrator of the report inquiry system 500.

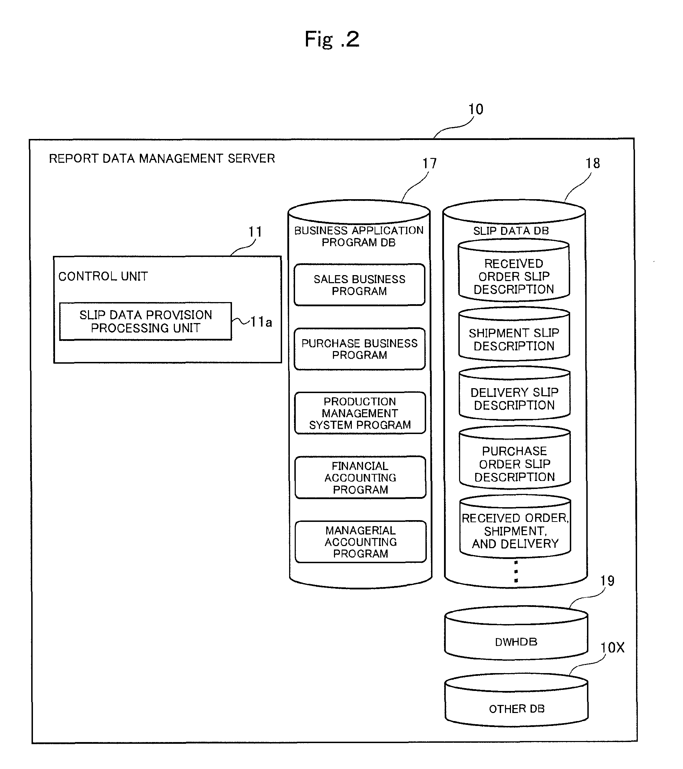

Fig. 2 is a block diagram illustrating an exemplary configuration of the report data management server 10. The report data management server 10 includes a control unit 11, a business application program DB 17, a slip data DB 18, a DWH DB 19, and the other DB 10X that stores various kinds of data (for example, data used by various kinds of programs stored in the business application program DB 17) necessary for implementing a function of a general core business server as illustrated in Fig. 2. The other DB 10X is not a part particularly related to the present invention, and a detailed description is not provided.

The control unit 11 has a function of performing various kinds of control. In the present embodiment, the control unit 11 includes a slip data provision processing unit 11a as illustrated in Fig. 2.

The slip data provision processing unit 11a has a function of providing the plurality of user terminals 31 to 3N with slip data. Here, as an example of the function of providing the user with slip data, various kinds of functions of allowing the user to check content of slip data such as a function of retrieving various kinds of data or a function of generating a screen based on data are considered. In the present embodiment, the slip data provision processing unit 11a has a function of providing the user with a screen (a retrieval target period of time designation screen) through which the user designates a retrieval target period of time of slip data in a calendar form. A method of providing in a calendar form will be described in detail later.

The business application program DB 17 is a storage medium storing programs used for various kinds of businesses. Examples of the programs stored in the business application program DB 17 include a sales business management program, a purchase business manages program, a production management program, a financial accounting management program, and a managerial accounting management program.

The slip data DB 18 is a storage medium storing various kinds of report data which are collected and marshaled by means of various kinds of information processing using various kinds of programs stored in the business application program DB 17. In the present embodiment, the slip data DB 18 is a database storing slip data transferred from the core business server 110 in a certain format, and configured with a plurality of cubes.

Each cube stores report data according to content of each business of each business unit in a business process according to a business application program. In other words, each cube stores report data according to content of each business such as received order slip description, shipment slip description, delivery slip description, or purchase order slip description.

Further, a cube storing report data according to relevant business content of each relevant business integrally representing contents of certain relevant businesses which are associated with a plurality of businesses units may be disposed. In other words, for example, a cube storing report data integrally representing contents of certain relevant businesses (businesses relevant to a received order, shipment, and delivery) such as a received order, shipment, and delivery may be disposed.

In other words, each cube stores report data of each classification classified according to business content such as report data according to content of each business of each business unit in a business process or report data according to relevant business content of each relevant business integrally representing contents of certain relevant businesses which are associated with a plurality of businesses units.

Further, each cube stores data configured with usually disposed items (for example, items such as received order slip header information, received order slip description information, and delivery date schedules for slip data corresponding to a received order slip. The items are stored in association with each other to be retrievable based on a key such as a slip number. The slip number includes a received order number, a purchase order number, a shipment number, an acceptance or delivery numbers, a bill reference, a billing number, an accounting number, and the like.) for corresponding report data.

The report data management server 10 has a function of providing various kinds of data stored in the slip data DB 18 and the other DB 10X according to a request from a certain external device, that is, a request from the user terminals 31 to 3N and the integrated core business system 100 in the present embodiment. In other words, the report data management server 10 has a function as a core business server. In other words, the report data management server 10 includes an ERP engine.

Although not illustrated, in the present embodiment, the report data management server 10 is assumed to have a function as a DWH server having various kinds of functions for implementing a data warehouse. As the report data management server 10 has a configuration of functioning as the ERP engine and the DWH server, it is possible to perform provision of information required as an integrated core business system even on integrated core business systems having different configurations (for example, an integrated core business system including only a DWH server, or an integrated core business system including only a DWH server as well as the integrated core business system 100 including a core business server and a DWH server).

Each of the user terminals 31 to 3N is an information processing apparatus including a central processing unit (CPU), a read only memory (ROM), a random access memory (RAM), and a display unit such as Ipad (a registered trademark). In the present embodiment, each of the user terminals 31 to 3N is assumed to include various kinds of applications used to deal with report data, such as a WEB browser. In the present embodiment, for example, each of the user terminals 31 to 3N has a function of defining a query (a retrieval item, a retrieval key, an extraction key, and the like) used to acquire necessary report data (process flow data in the present embodiment) from the report data management server 10 according to an operation input by the user, and transmitting the query to the report data management server 10. Each of the user terminals 31 to 3N includes a code reader (or a code reader function) that reads various kinds of codes such as a quick response (QR) code.

In the present embodiment, each of the user terminals 31 to 3N has a function of communicating with the report data management server 10 through the relay 20 and the communication network 40 and outputting data acquired from the report data management server 10 to a display unit through a function of software such as a certain web application (a WEB browser).

Next, an operation of the report inquiry system 500 according to the present embodiment will be described with reference to the drawings. There are cases in which content of an operation or process which is not particularly related to the present invention is not provided.

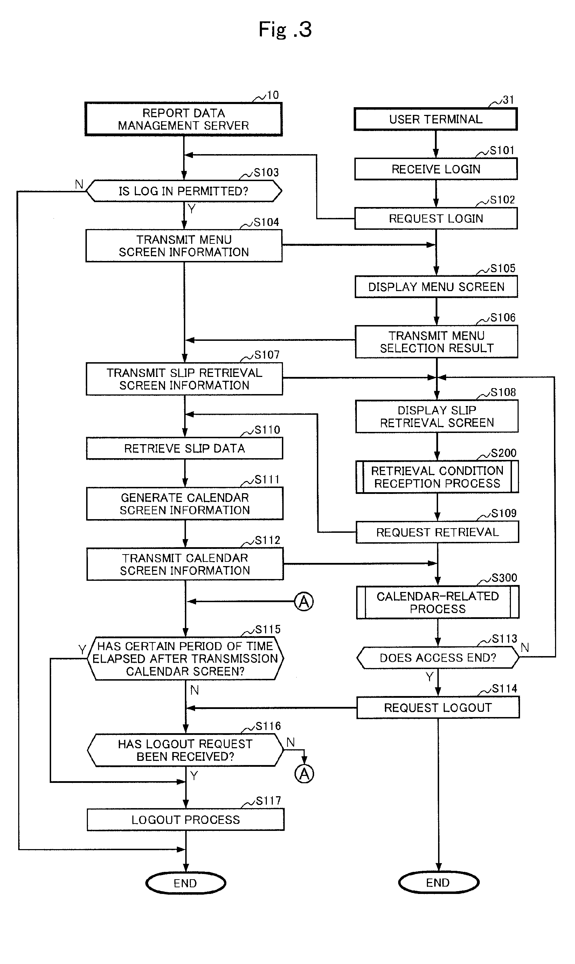

Fig. 3 is a flowchart illustrating an exemplary slip data provision process performed by report data management server 10 or the like in the report inquiry system 500 according to the present embodiment. Here, the description will proceed with an example in which the report data management server 10 provides slip data according to a request from the user terminal 31 used by a user X. The order of various processes configuring various kinds of flows described below is a random order within as long as there is no contradiction in process content.

In the slip data provision process, first, the user terminal 31 receives a login request made by the user X's login operation (step S101). For example, the login operation refers to an input operation of a previously set secret number. When the login to the user terminal 31 is permitted, it is permitted to perform various kinds of operations for using various kinds of functions provided by the user terminal 31.

When the user X executes a certain login operation in a state in which the user X is logging in the user terminal 31, the user terminal 31 accesses the report data management server 10, acquires a login screen, designates information (for example, a user ID and a password which are previously set) necessary to log in on the login screen, and makes a login request (step S102). For example, the login request is made such that predetermined information (for example, an electronic certificate issued to the user X) used for a predetermined login determination is provided in addition to the user ID and the password. Further, when the operation to log in the report data management server 10 is performed, the user X may be requested to designate a language (for example, Japanese) used in a group to which the user belongs or various kinds of screens.

Upon receiving the login request, the report data management server 10 determines whether it is permitted to log in (step S103). For example, this determination may be made based on an ID, a password, an electronic certificate, and the like.

When it is determined that it is permitted to log in (Y in step S103), the report data management server 10 sets the user terminal 31 to a login state. When the user terminal 31 is set to a login state, the report data management server 10 transmits menu screen information representing a menu screen to the user terminal 31 (step S104). However, when it is determined that it is not permitted to login (N in step S103), the report data management server 10 ends the slip data provision process without setting the user terminal 31 to the login state. Further, when it is determined that it is not permitted to login, the report data management server 10 performs a process of notifying the user terminal 31 of login refusal.

Upon receiving the menu screen information, the user terminal 31 causes the menu screen represented by the received menu screen information to be displayed on the display unit equipped in the user terminal 31 (step S105).

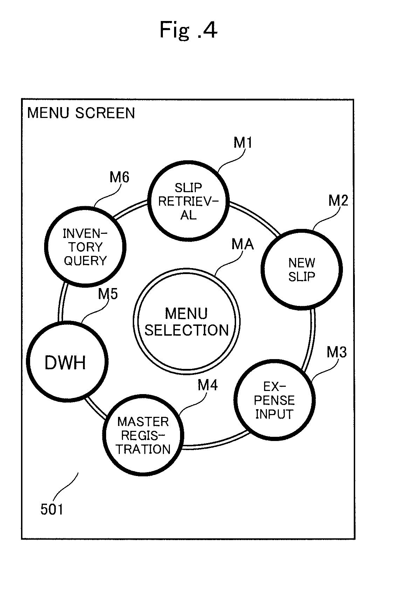

Fig. 4 is an explanatory diagram illustrating an exemplary menu screen. A menu arrangement circle display region 501 is provided on the menu screen as illustrated in Fig. 4. A menu arrangement circle MC in which menu buttons M1 to M6 on which a plurality of selectable menu names are displayed are arranged substantially on the circumference thereof is displayed on the menu arrangement circle display region 501. Further, a title display region MA on which a title of a menu arrangement circle MC arranged on a central region of a circle formed by the menu arrangement circle MC is displayed is provided on the menu arrangement circle display region 501 as illustrated in Fig. 4. Here, as the menu buttons M1 to M6, a slip retrieval button M1 to be pushed down to retrieve a slip, a new slip button M2 to be pushed down to newly create a slip, an expense input button M3 to be pushed down to input expense, a master registration button M4 to be pushed down to register a master, a DWH button M5 to be pushed down, for example, to register data to the DWH DB 19, and an inventory query button M6 to be pushed down to query inventory information are provided.

In the menu screen displayed on the display unit of the user terminal 31 in which a touch panel is arranged, the user X pushes down any one of the menu buttons M1 to M6 through a touch operation (a contact operation by a finger). In the present embodiment, the slip retrieval button M1 is assumed to be pushed down. Further, a description of a process when the other menu buttons M2 to M6 are pushed down is not provided.

When the slip retrieval button M1 is pushed down in the menu screen, the user terminal 31 transmits the fact that the slip retrieval button M1 has been pushed down as the menu selection result to the report data management server 10 (step S106).

Upon receiving the menu selection result representing that the slip retrieval button M1 has been pushed down, the slip data provision processing unit 11a of the report data management server 10 transmits slip retrieval screen information representing a slip retrieval screen designating a slip retrieval condition to the user terminal 31 (step S107).

Upon receiving the slip retrieval screen information, the user terminal 31 causes the slip retrieval screen represented by the received slip retrieval screen information to be displayed on the display unit of the user terminal 31 (step S108), and executes a retrieval condition reception process (step S200).

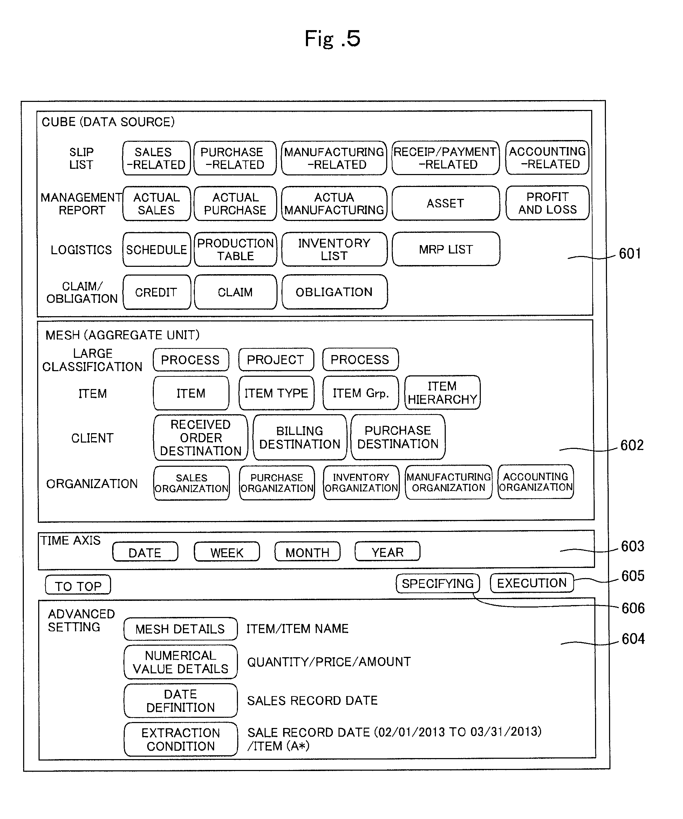

Fig. 5 is an explanatory diagram illustrating an exemplary slip retrieval screen. The slip retrieval screen is provided with a cube selecting region 601 used to select a cube or a cube group of a retrieval target, a mesh selecting region 602 used to select a mesh representing an item or an item group of certain report data as an aggregate unit, a time range selecting region 603 used to select a time axis (time range) as an aggregate unit, an advanced setting region 604 used to set an advanced retrieval condition or an aggregate condition, an execution button 605 to be pushed down to make a retrieval request, and a specifying button 606 to be pushed down to perform specifying as illustrated in Fig. 5. In the present embodiment, there are cases in which respective screens are illustrated with different sizes for the sake of easy description of respective screens.

Here, "specifying" means adding an identification number (for example, slip number) uniquely allocated to each slip data to data of a retrieval result list in order to specify an original slip (non-aggregate slip data) of data represented by a retrieval result list aggregated in units of meshes. In the present embodiment, since a specifying function is provided, it is easy to perform analysis through the retrieval result list aggregated in units of meshes and check data (an abnormal value or data having a large discrepancy between a plan and an actual performance) whose details need to be checked by an original slip.

The cube selecting region 601 is provided with various kinds of selecting buttons such as a sales-related selecting button used to select a cube storing sales-related report data, a purchase-related selecting button used to select a cube storing purchase-related report data, a manufacturing-related selecting button used to select a cube storing manufacturing-related report data, a receipt/payment-related selecting button used to select a cube storing receipt/payment-related report data, and an accounting-related selecting button used to select a cube storing accounting-related report data as illustrated in Fig. 5.

The mesh selecting region 602 is provided with various kinds of selecting buttons used to select a large classification mesh, a mesh related to an item, a mesh related to a client, and a mesh related to an organization as illustrated in Fig. 5. It is possible to select two or more of various kinds of selecting buttons disposed in the mesh selecting region 602 at the same time.

The time range selecting region 603 is provided with various kinds of selecting buttons used to select a date, a week, a month, or a year as a time axis as illustrated in Fig. 5. In the present embodiment, the user terminal 31 displays a calendar screen representing a calendar corresponding to a time axis selected by the user X. The calendar screen will be described later in detail.

The advanced setting region 604 is provided with a mesh details button to be pushed down to set mesh details for narrowing down a retrieval condition on a mesh selected in the mesh selecting region 602, a numerical value details button to be pushed down to set an advanced retrieval condition on various kinds of numerical items in slip data, a date defining button to be pushed down to set an advanced retrieval condition on various kinds of date items in slip data, and an extraction condition button to be pushed down to set other advanced retrieval conditions.

As main three kinds of a cube, mesh, and a time axis are used as selection targets for deciding retrieval condition, selection targets can be compactly displayed as illustrated in Fig. 5, and all selection targets can be displayed on a single screen depending on a display screen size of a display device equipped in the user terminal 31. Further, selection items arranged on each selecting region are exemplary, and for example, any other selection item may be included.

In the slip retrieval screen, the user X performs a touch operation to select one of the cubes arranged on the cube selecting region 601 and select one or two or more meshes of the meshes arranged on the mesh selecting region 602.

Specifically, the user X selects a cube of a retrieval target by pushing down one of the selecting buttons arranged on the cube selecting region 601, and selects a report item in report data (decided by selection of a cube) to be retrieved and extracted as a retrieval target by pushing down one or two or more of the selecting buttons arranged on the mesh selecting region 602.

Further, in the slip retrieval screen, the user X selects one of the time axes arranged on the time range selecting region 603 as necessary. Specifically, the user X selects a time axis used for an aggregate by pushing down one of the selecting buttons arranged on the time range selecting region 603.

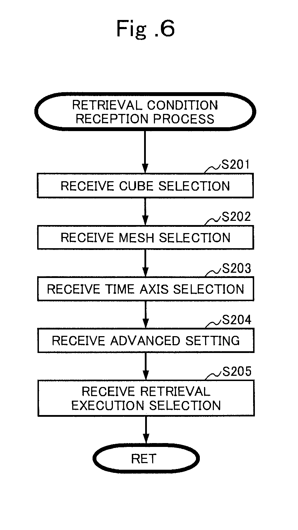

Fig. 6 is a flowchart illustrating an exemplary retrieval condition reception process executed by the user terminal 31. In the retrieval condition reception process, the user terminal 31 receives selection of a cube by the user X's touch operation (step S201), receives selection of one or two or more meshes by the user X's touch operation (step S202), and receives selection of a time axis by the user X's touch operation (step S203).

Further, for example, selection of a mesh may not be received according to the user X's desire. In this case, for example, the user terminal 31 may be configured to proceed to a next step even in a state in which a mesh is not selected. Further, the slip retrieval screen may not be provided with the mesh selecting region 602.

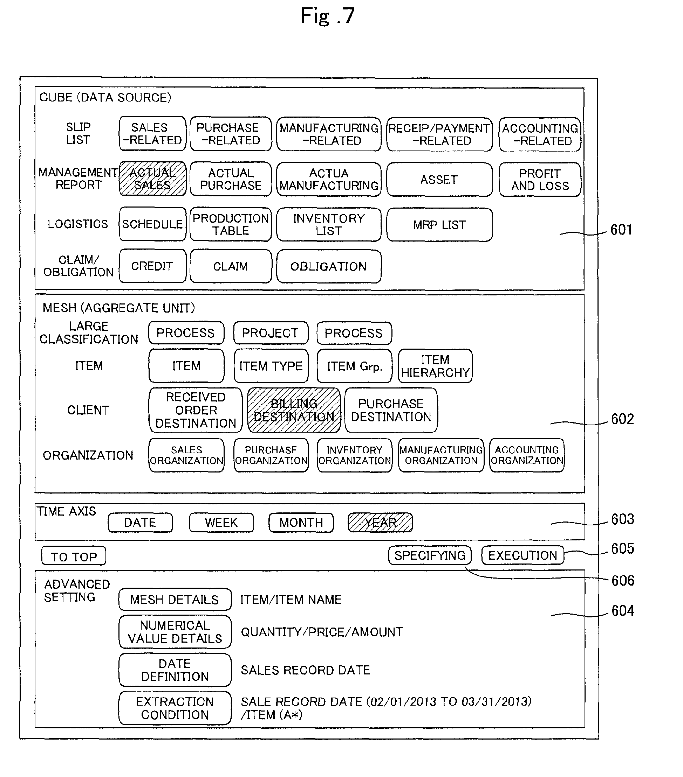

Fig. 7 is an explanatory diagram illustrating an exemplary slip retrieval screen in a state in which a cube and the like are selected. The example illustrated in Fig. 7 illustrates a state in which an actual sales performance is selected as a cube, a billing destination is selected as a mesh, and a year is selected as a time axis.

Further, in the present embodiment, in the slip retrieval screen, the user X can perform an advanced setting by pushing down one of the mesh detail button, the numerical value details button, the date defining button, and the extraction condition button disposed on the advanced setting region 604 as necessary. When an advanced setting operation performed by the user X is received, the user terminal 31 displays a screen (an advanced setting screen) according to the received advanced setting operation (not illustrated), and receives an advanced setting performed by the user X (step S204).

Further, the advanced setting may be arbitrarily set according to the user X's desire, and a process or operation related to the advanced setting may not be performed. When the advanced setting is completed, the process returns to the slip retrieval screen (see Fig. 7).

When selection and setting of the retrieval condition in the slip retrieval screen end, the user X pushes down the execution button 605 by a touch operation.

Upon detecting that the execution button 605 is pushed down in the state in which the retrieval condition is selected and set, the user terminal 31 receives retrieval execution selection (step S205), suggests the selected or designated retrieval condition, and transmits a retrieval request to the report data management server 10 (step S109).

Upon receiving the retrieval request, the report data management server 10 retrieves slip data satisfying the suggested retrieval condition according to the received retrieval request with reference to the slip data stored in the slip data DB 18 (step S110). In the present embodiment, the report data management server 10 retrieves slip data according to the time axis represented by the retrieval request. In other words, for example, when a "date" is selected as the time axis, the report data management server 10 retrieves slip data corresponding to dates of a predetermined number of days prior to a retrieval date. Further, when a "year" is selected as the time axis, the report data management server retrieves slip data corresponding to dates of a year including a retrieval date. Further, a correspondence relation between a time axis and a date is not particularly limited, and a certain correspondence relation may be defined in advance as an initial condition or may be configured to be arbitrarily settable by a system administrator or a user.

When slip data is retrieved according to the retrieval condition, the report data management server 10 generates calendar screen information representing a calendar screen displaying a calendar in which the retrieved slip data is reflected (step S111). In the present embodiment, the report data management server 10 specifies a sales record date to be included in the retrieved slip data with reference to the slip data DB 18, and generates calendar information representing a calendar screen displaying specified content. Further, a date used by the report data management server 10 is not limited to a sales record date, and may be a date which can be included in slip data such as a so-called slip date, a delivery date, or a shipment date. Further, the report data management server 10 may reflect slip data in a calendar using a date definition selected by the user X.

Further, in the present embodiment, the report data management server 10 reflects slip data in certain calendar information, and generates calendar information representing a screen according to a request from the user. Here, a method of generating the calendar information is not limited to this example, and for example, part (for example, background screen information or layout information) of the calendar information may be stored in the user terminal 31 in advance, and the report data management server 10 may generate information (that is, part of the calendar information) used to display the calendar screen in the user terminal 31.

When the calendar screen information is generated, the report data management server 10 transmits the generated calendar screen information to the user terminal 31 (step S112).

Upon receiving the calendar screen information, the user terminal 31 performs a process (a calendar-related process) using the received calendar screen information (step S300). In the present embodiment, as the calendar-related process, displaying the calendar screen, switching of a display form of the calendar screen, and switching from the calendar screen to any other screen are performed.

Further, in the present embodiment, when a change or switching of a display screen is performed, the user terminal 31 suggests necessary information, and performs communication with the report data management server 10. Here, a configuration for changing a calendar screen is not limited to this example, and a change or switching of a screen may be performed independently by the user terminal 31. In this case, for example, the user terminal 31 may be configured to receive information (for example, screen information or slip data) necessary to change a screen from the report data management server 10 in advance. For example, preferably, the report data management server 10 transmits the slip data retrieved in step S110 together with the calendar screen information in step S112, and the user terminal 31 changes or switches a screen with reference to the received slip data.

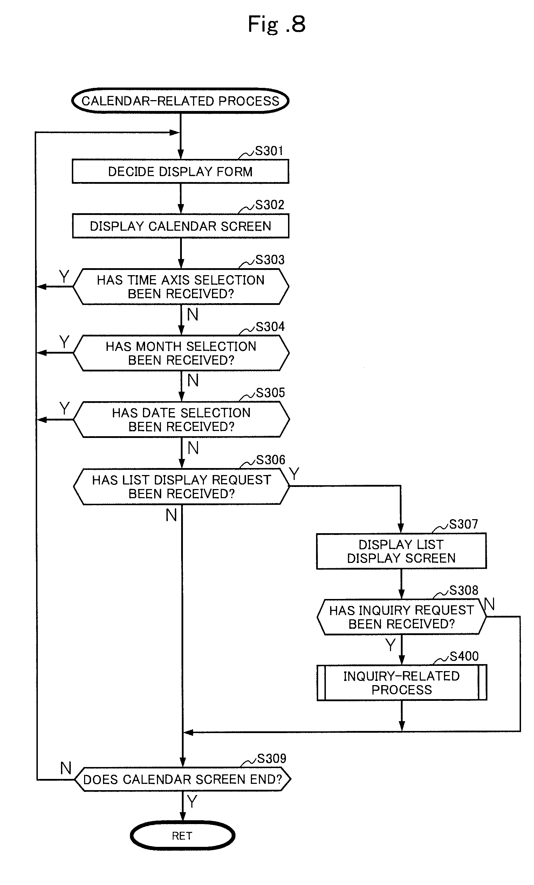

Fig. 8 is a flowchart illustrating an exemplary calendar-related process performed by the user terminal 31. In the calendar-related process, the user terminal 31 decides a display form of a calendar (step S301). In the present embodiment, the user terminal 31 decides a form corresponding to the time axis received in the retrieval condition reception process as a display form. In other words, for example, when a "year" is received as the time axis, the user terminal 31 decides a form previously associated with a year including a retrieval date as a display form.

When the display form is decided, the user terminal 31 causes the calendar screen to be displayed on a display screen of the display device equipped in the user terminal 31 based on the received calendar screen information and the decided display form (step S302).

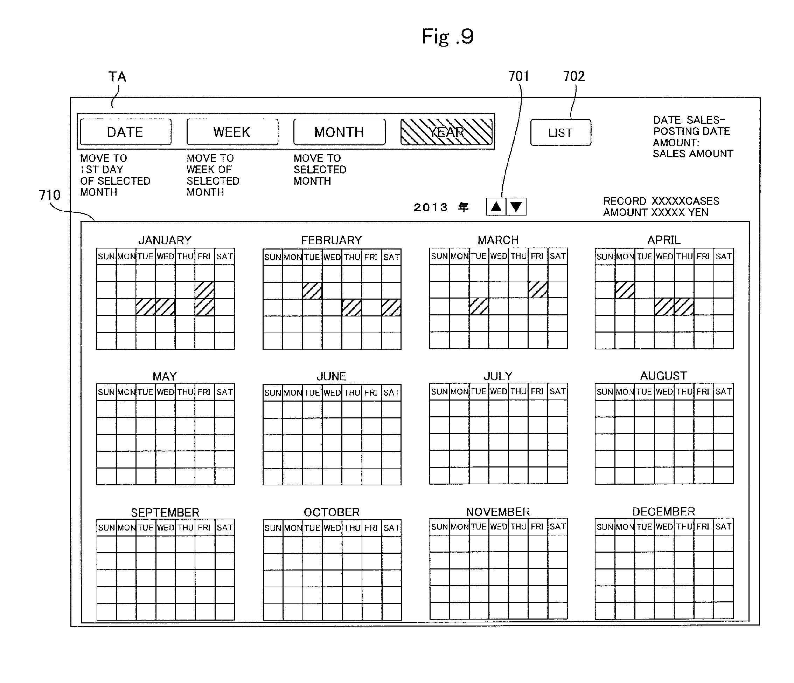

Fig. 9 is an explanatory diagram illustrating an exemplary calendar screen. Fig. 9 illustrates a calendar screen (an annual calendar screen) corresponding to a time axis of "year." The annual calendar screen is provided with a time axis display region TA representing a time axis corresponding to a display form, a change button 701 to be pushed down to make a year change request, a list button 702 to be pushed down to perform a list display, and a month image display region 710 represents images (month images) corresponding to January to December as illustrated in Fig. 9. In the present embodiment, illustration of numbers (that is, numbers representing dates) displayed on squares in the month image is not provided for easy visibility.

The time axes of a date, a week, a month, and a year are selectably displayed on the time axis display region TA. In the present embodiment, the time axis display region TA is displayed such that a display form corresponding to the calendar screen is identifiable. Further, the time axis display region TA of substantially the same form is displayed on the calendar screens corresponding to the respective display forms. The user terminal 31 receives selection of a time axis (time axis selection) by the user X through character strings (or images, the same applies hereinafter) corresponding to the time axes displayed on the time axis display region TA.

In the month image display region 710, for example, a date having a slip is displayed in a color different from that of a date having no slip so that the user can identify a date having a slip. The user terminal 31 receives selection of a month (month selection) by the user X through character strings corresponding to January to December displayed on the month image display region 710. Further, the user terminal 31 receives selection of a date (date selection) by the user X through squares of a table corresponding to January to December displayed on the month image display region 710. A month or date selection operation method is not particularly limited, and various methods such as a touch operation or a click operation using a mouse can be employed.

Further, in the present embodiment, the user terminal 31 can receive range operation selection by the user X. In other words, for example, when range selection including a display region of January and February by the user X is received by a so-called drag operation, the user terminal 31 may decide January and February as a display target and update the calendar screen. Further, for example, when an operation of selecting squares from January 1st to January 10th is received by a so-called drag operation, the user terminal 31 may decide January 1st to January 10th as a display target and update the calendar screen.

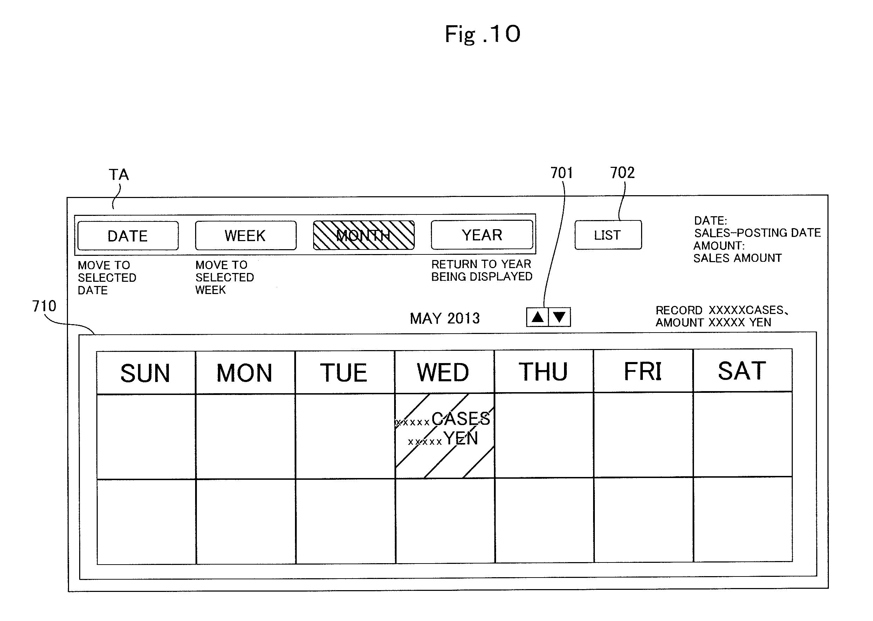

Fig. 10 is an explanatory diagram illustrating another exemplary calendar screen. Fig. 10 illustrates a calendar screen (a monthly calendar screen) corresponding to a time axis of "month." The monthly calendar screen is provided with a change button 801 to be pushed down to make a month change request, a list button 802 to be pushed down to perform a list display, and a date image display region 810 representing images (date images) representing dates as illustrated in Fig. 10. In the present embodiment, illustration of numbers (that is, numbers representing dates) displayed on squares as date images is not provided for the sake of visibility.

In the date image display region 810, for example, a date having a slip is displayed in a color different from that of a date having no slip so that the user X can identify a date having a slip. Further, the number of slips and a total sales amount are displayed on a square representing a date having a slip as information (report data-related information) related to report data to which sales-posting date is set. The user terminal 31 receives selection of a date (date selection) by the user X through character strings corresponding to dates displayed on the date image display region 810.

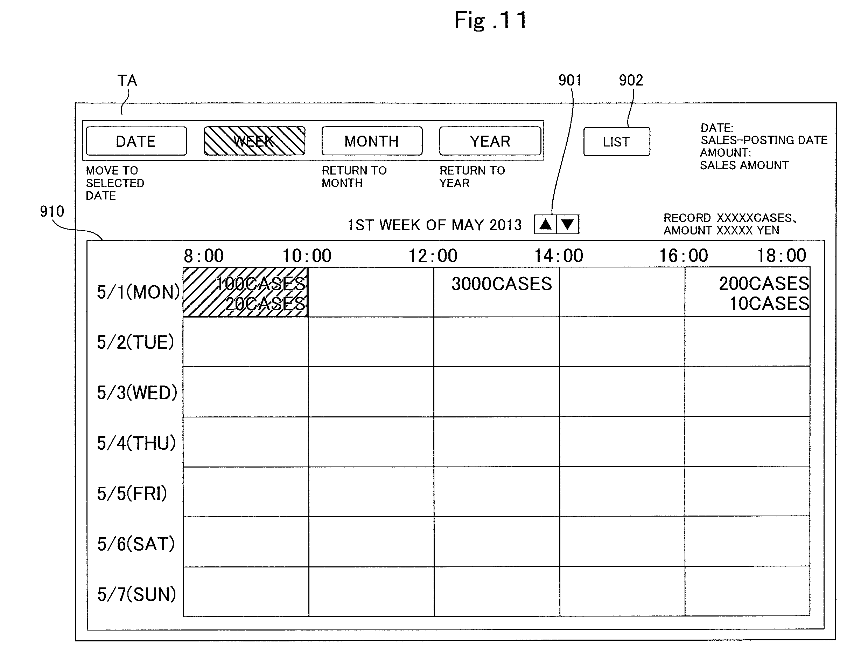

Fig. 11 is an explanatory diagram illustrating another exemplary calendar screen. Fig. 11 illustrates a calendar screen (a weekly calendar screen) corresponding to a time axis of "week". The weekly calendar screen is provided with a change button 901 to be pushed down to make a week change request, a list button 902 to be pushed down to perform a list display, and a date image display region 910 representing images (date images) representing dates as illustrated in Fig. 11. Further, in the present embodiment, a date image is assumed to be configured so that a time is identifiable.

In the date image display region 910, for example, a time and date having a slip is displayed in a color different from that of a time and date having no slip so that the user X can identify a date having a slip and a time corresponding to a slip. The user terminal 31 receives selection of a date (date selection) by the user X through images (specifically, squares) corresponding to time and dates displayed on the date image display region 910.

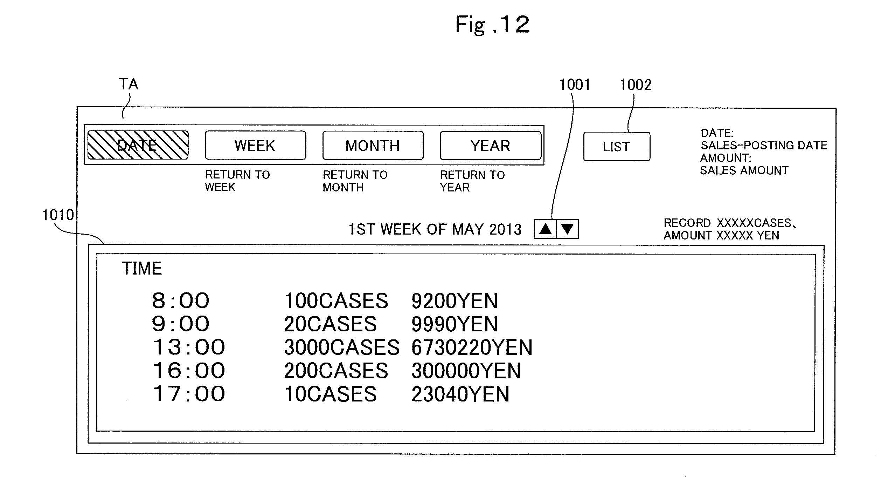

Fig. 12 is an explanatory diagram illustrating another exemplary calendar screen. Fig. 12 illustrates a calendar screen (a daily calendar screen) corresponding to a time axis of "date". The daily calendar screen is provided with a change button 1001 to be pushed down to make a date change request (more accurately, a year, a month, and a date), a list button 1002 to be pushed down to perform a list display, and a date information display region 1010 representing information (date information) related to slip date corresponding to a date as illustrated in Fig. 12. In the present embodiment, the date information is assumed to be configured so that an item "time" set to slip data, the number of slip data (the number of cases) to which the same time is set, and a total sales represented by corresponding slip data are identifiable. Further, content of an item set to slip data is not particularly limited, and one in which a period of time corresponding to slip data is specifiable such as a time in which slip data is registered or a time in which a sale is decided is desirable.

When the calendar screen is displayed, the user terminal 31 determines whether time axis selection has been received (step S303). Here, when it is determined the time axis selection has been received (Y in step S303), the user terminal 31 proceeds to the process of step S301, and decides a form corresponding to the selected time axis as a display form.

Further, the user terminal 31 determines whether month selection has been received (step S304). Here, when it is determined that the month selection has been received (Y in step S304), the user terminal 31 proceeds to the process of step S301, and decides a form corresponding to a "month" as a display form. In this manner, the user terminal 31 changes a target to be displayed on the calendar screen to a selected month.

Further, the user terminal 31 determines whether date selection has been received (step S305). Here, when it is determined that the date selection has been received (Y in step S305), the user terminal 31 proceeds to the process of step S301, and decides a form corresponding to a "date" as a display form. In this manner, the user terminal 31 changes a target to be displayed on the calendar screen to a selected date.

Further, when it is determined that the date selection has not been received (N in step S305), the user terminal 31 determines whether the list display request has been received (step S306). Here, for example, when it is determined that the list display request has not been received (N in step S306) as an operation by the user X has not been received during a certain period of time, the user terminal 31 proceeds to a process of step S309 which will be described later.

Meanwhile, for example, when the selection operation of the list button 702 in the annual calendar screen is received and thus it is determined that the list display request has been received (Y in step S306), the user terminal 31 displays a list display screen (step S307). In the present embodiment, the user terminal 31 transmits a display request of the list display screen corresponding to the calendar screen being displayed to the report data management server, receives the list display screen information generated by the report data management server 10, and displays the list display screen on the display screen of the display device equipped in the user terminal 31.

In other words, in order to cause the list display screen to be displayed on the user terminal 31, the report data management server 10 retrieves slip data according to the retrieval condition corresponding to the calendar screen, and generates the list display screen information representing the list display screen on which a list of retrieved slip data is displayed as a retrieval result. Further, there are cases in which the report data management server 10 performs, for example, an aggregate process using slip data according to the request from the user terminal 31.

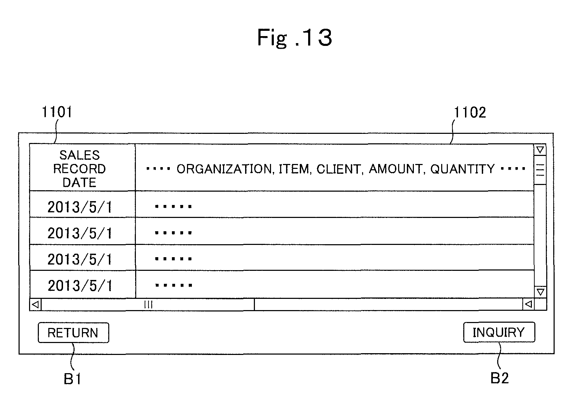

Fig. 13 is an explanatory diagram illustrating an exemplary list display calendar screen. The list display calendar screen is provided with a display region 1101 for displaying a retrieval result, a return button B1 to be pushed down to return to a previous screen, and an inquiry button B2 to be pushed down to start a certain inquiry process as illustrated in Fig. 13. Further, when a slip number in the list display calendar screen is selected by a touch operation, the user terminal 31 transmits an acquisition request for corresponding slip data to the report data management server 10. The report data management server 10 transmits the corresponding slip data to the user terminal 31 with reference to the slip data DB 18 according to the acquisition request for the slip data. Then, the user terminal 31 displays the received slip data through the display screen of the display unit.

When the list screen is displayed, the user terminal 31 determines whether an inquiry request has been received (step S308). Here, when the selection operation of the inquiry button B2 has been received and thus it is determined that the inquiry request has been received (Y in step S308), the user terminal 31 performs a certain inquiry-related process (step S400), and then proceeds to the process of step S309 which will be described later. Further, a description of an inquiry process using information displayed as a retrieval result is not presented herein.

Meanwhile, for example, when the selection operation of the return button B1 has been received and thus it is determined that the inquiry request has not been received (N in step S308), the user terminal 31 determines whether the display of the calendar screen ends (step S309). Here, when the display of the calendar screen is determined not to end (N in step S309), the user terminal 31 proceeds to the process of step S301. Meanwhile, for example, when a certain end operation has been received and thus the display of the calendar screen is determined to end (Y in step S309), the user terminal 31 ends the process, and proceeds to the process of step S113 of the slip data provision process (see Fig. 3).

The user terminal 31 determines whether the access to the report data management server 10 ends as step S113 of the slip data provision process (step S113). Here, for example, when the user X performs an operation of ending the access such as an operation of ending the browser (Y in step S113), the user terminal 31 transmits a logout request to the report data management server 10 (step S114). Further, when an operation of continuing the access is performed (N in step S113), the user terminal 31 proceeds to the process of step S108, and displays the slip retrieval screen (see Fig. 5). In this case, the slip retrieval screen in the state in which the previous retrieval condition is selected or designated may be displayed so that the user terminal 31 receives a change in all or part of the retrieval condition by the user X's operation in the slip retrieval screen (see Fig. 7). When the retrieval condition whose all or part has been changed is received, the user terminal 31 suggests the retrieval condition by the same process as the above-described process, and makes a retrieval request.

Meanwhile, when the calendar screen information is transmitted in step S112, the report data management server 10 starts to measure a period of time (a standby period of time) in which information exchange with the user terminal 31 is not performed, and monitors whether the standby period of time has elapsed by a certain period of time (for example, 5 minutes, 10 minutes, or 30 minutes) (has reached a certain period of time) (step S115).

Upon receiving the logout request during the measurement of the standby period of time (Y in step S116), the report data management server 10 stops measuring the standby period of time, performs a logout process of releasing the login state (step S117), and then ends the process.

Further, when the standby period of time is determined to have elapsed by the certain period of time (Y in step S115), the report data management server 10 ends measuring the standby period of time, performs a logout process of releasing the login state (step S117), and then ends the process.

As described above, the report data management server 10 receives the slip data retrieval request (that is, a list provision request representing a retrieval result list) from the user terminal 31, and performs the process of providing a list of extracted and collected slip data according to a request.

As described above, the report data management server 10 on which the ERP runs and provides the user terminal 31 with report data (for example, some slip data) generated for each business unit in a business process via the communication network 40 according to a request from the user terminal 31 used by the user includes a report data storage unit (for example, the slip data DB 18) storing report data, and generates retrieval target period of time designation screen information (for example, the calendar screen information) representing a retrieval target period of time designation screen (for example, a calendar screen which receives a selection of a period of time to be displayed as a retrieval result; see Fig. 9) used to designate a retrieval target period of time according to a request from the user terminal 31 (for example, step S111), provides the retrieval target period of time designation screen represented by the retrieval target period of time designation screen information (for example, step S112), receives and accepts a retrieval target period of time designated through the retrieval target period of time designation screen from the user terminal 31 (appropriately receives it during execution of the calendar-related process by the user terminal 31 in the above embodiment; for example, see the description related to steps S303 to S305 of Fig. 8), provides the user terminal 31 with report data within a period of time represented by the received retrieval target period of time as a retrieval result (transmits information used to cause the list display screen to be displayed on the user terminal 31 in the above embodiment. For example, see the description related to step S307 of Fig. 8), wherein the retrieval target period of time designation screen (for example, the calendar screen) is provided with a report data-related information display region (for example, the month image display region 710) formed by a plurality of specific period of time regions (for example, squares divided in units of dates) divided in units of specific period of times, and report data-related information (for example, the number of slips and a total sales amount) related to report data to which a certain item is set in a corresponding specific period of time is displayed on the plurality of specific period of time regions, and in order to generate the retrieval target period of time designation screen information, the report data management server 10 specifies the report data-related information with reference to the report data storage unit (for example, the slip data DB 18), and generates the retrieval target period of time designation screen information representing the retrieval target period of time designation screen on which each specified report data-related information is displayed on each specific period of time region. Accordingly, it is possible to provide data desired by a user by a simple process in a business system (ERP system) providing information related to reports.

In other words, as a dedicated screen used to designate a report data retrieval target period of time is provided to the user, it is possible to provide data desired by a user by a simple process according to an operation received through the dedicated screen.

Further, in the above embodiment, the report data management server 10 retrieves report data within a period of time represented by the received retrieval target period of time with reference to the report data storage unit (for example, the slip data DB 18), and provides the retrieved report data to the user terminal as the retrieval result, and the list screen is displayed on the user terminal 31 (for example, step S307). Thus, it is possible to rapidly provide report data needed by the user.

Further, in the above embodiment, the retrieval target period of time designation screen (for example, calendar screen) is provided with the display period of time unit selection region (for example, the time axis display region TA) used to select the display period of time unit of the report data-related information display region, the report data management server 10 specifies report data-related information according to a selected display period of time unit with reference to the report data storage unit (for example, the slip data DB 18) as the display period of time unit (for example, a month) is selected through the retrieval target period of time designation screen, and newly generates retrieval target period of time designation screen information including the report data-related information display region of the selected display period of time unit, and the user terminal is configured to be able to display the calendar screen (for example, the monthly calendar screen). Thus, the user can designate the retrieval target period of time through the screen which is easy to be dealt with by the user.

Further, in the above embodiment, the report data-related information is decided according to the display period of time unit (for example, a year, a month, a week, and a date serving as a time axis), and is configured as information (for example, coloration) representing the presence or absence of report data to which a certain item is selected in each specific period of time, information (for example, the number of slips or total amounts) representing an aggregate result of report data to which a certain item is selected in each specific period of time, or information (for example, a time) representing at least some items of report data to which a certain item is selected in each specific period of time, and thus visibility of the retrieval target period of time designation screen can be improved. In other words, since the report data-related information displayed on the screen can have a configuration being different according to characteristic (particularly, a difference in a time axis corresponding to a display form) of a screen, it is possible to provide the retrieval target period of time designation screen which is high in visibility for the user.

Further, in the above embodiment, the report data-related information display region is decided according to the display period of time unit (for example, a year, a month, a week, and a date serving as a time axis), is the display region (for example, the month image display region 710) of the calendar form configured with a calendar corresponding to a certain number of months or the display region (for example, the date image display region 810) on which the report data-related information corresponding to a certain number of dates is displayed, and the specific period of time region is decided according to the display period of time unit, and is a square (for example, see Fig. 9) corresponding to each date in a calendar or a square (for example, see Fig. 11) corresponding to each certain unit time. Thus, it is possible to further improve the visibility of the retrieval target period of time designation screen.

Further, in the above embodiment, the report data management server 10 generates the list display screen as the retrieval result data, and the user terminal 31 is configured to be able to display the list display screen (for example, step S307), and thus it is possible to easily generate and provide the report list (the retrieval result list) which is configured with items desired by the user and collected by the aggregate unit desired by the user.

Further, in the above embodiment, the retrieval condition designation screen is provided with an advanced setting desire reception region used to receive a desire of an advanced setting of the retrieval condition, and as reception of the desire of the advanced setting of the retrieval condition is notified by the user terminal 31, the report data management server 10 is configured to provide an advanced setting screen used to perform the advanced setting of the retrieval condition and receive a retrieval condition including advanced setting content obtained by performing the advanced setting through the advanced setting screen. Thus, it is possible to easily designate the advanced retrieval condition desired by the user, and it is possible to generate and provide various retrieval result data desired by the user.

Further, the above embodiment has been described in connection with the example in which the report data management server 10 includes the time axis selected by the user in the slip data retrieval condition. However, the report data management server 10 may be configured to set the slip data retrieval condition (for example, a year including a retrieval date and a preceding year) as a certain time axis and transmit information used to change a type (a year, a month, a week, or a date) of a calendar to the user terminal 31 without performing communication with the report data management server 10. In this case, for example, the report data management server 10 may be configured to collectively transmit a plurality of pieces of information used to display calendar screens corresponding to a plurality of time axes through the user terminal. Through this configuration, it is possible to improve calendar screen operability in the user terminal.

Further, the above embodiment has been described in connection with the example in which the report data management server 10 performs the retrieval condition reception process and generates the retrieval target period of time designation screen information (for example, the calendar screen information) (see Figs. 3, 5, and 6). However, the report data management server 10 may be configured to generate the retrieval target period of time designation screen information according to a request from the user terminal without performing the retrieval condition reception process. In other words, the user terminal 31 may be configured to display the retrieval target period of time designation screen (for example, the calendar screen) (see Fig. 9) without displaying the slip retrieval screen (see Fig. 5) after the menu screen is displayed (see Fig. 4). In this case, for example, as a retrieval target period of time designation screen display request is received from the user terminal, the report data management server 10 may be configured to retrieve slip data satisfying a previously set retrieval condition and generate the retrieval target period of time designation screen information in which the received slip data is reflected. In this case, a method of setting the retrieval condition is not particularly limited, and for example, the report data management server 10 may be configured to receive a retrieval condition setting operation by the user through the user terminal at an arbitrary time. Further, the report data management server 10 may be configured to transmit menu screen information representing a menu screen including a plurality of retrieval target period of time designation screen display request reception buttons respectively associated with different retrieval conditions to the user terminal.

Although not particularly mentioned in the above embodiment, the report data management server 10 executes the respective processes (see Fig. 3) according to a processing program (a report data management program) stored in a storage medium equipped in the report data management server 10. Further, the user terminals 31 to 3N execute the respective processes (see Figs. 3, 6, and 8) according to a processing program (a report data management program) stored in a storage medium equipped in its own user terminal.

Further, the configuration of the report inquiry system 500 is not limited to the above configuration, and some or all of the functions provided by one of the user terminal 31 and the report data management server 10 in the report inquiry system 500 may be a configuration of the other. In other words, for example, some or all of the processes described as the process executed by the user terminal 31 may be executed by the report data management server 10, or some or all of the processes described as the process executed by the report data management server 10 may be executed by one of the plurality of user terminals 31 to 3N. Further, some or all of the information stored in a storage unit equipped in the report data management server 10 may be stored in one of the plurality of user terminals 31 to 3N.

### Industrial Applicability

According to the present invention, it is useful in providing data desired by a user by a simple process in a business system (ERP system) providing information related to reports.

### Reference Signs List

- 10:: Report data management server
- 20:: Relay
- 31 to 3N:: User terminal
- 40:: Communication network
- 51:: Communication network
- 100:: Integrated core business system
- 110:: Core business server
- 120:: DWH server
- 500:: Report inquiry system

## Claims

1. A report data management server on which an enterprise resource planning (ERP) runs and provides a user terminal used by a user with report data generated for each business unit in a business process via a communication network according to a request from the user terminal, comprising:
a report data storage unit that stores report data;
a retrieval target period of time designation screen information generating unit that generates retrieval target period of time designation screen information representing a retrieval target period of time designation screen used to designate a retrieval target period of time according to a request from the user terminal;
a retrieval target period of time designation screen providing unit that provides the retrieval target period of time designation screen represented by the retrieval target period of time designation screen information;
a retrieval target period of time receiving unit that receives and accepts a retrieval target period of time designated through the retrieval target period of time designation screen from the user terminal; and
a retrieval result providing unit that provides the user terminal with report data within a period of time represented by the retrieval target period of time received by the retrieval target period of time receiving unit as a retrieval result,
wherein the retrieval target period of time designation screen is provided with a report data-related information display region formed by a plurality of specific period of time regions divided in units of specific period of times, and report data-related information related to report data to which a certain item is set in a corresponding specific period of time is displayed on the plurality of specific period of time regions, and
the retrieval target period of time designation screen information generating unit specifies the report data-related information with reference to the report data storage unit, and generates the retrieval target period of time designation screen information representing the retrieval target period of time designation screen on which each specified report data-related information is displayed on each specific period of time region.

2. The report data management server according to claim 1, further comprising,
a report data retrieving unit that retrieves report data within a period of time represented by the retrieval target period of time received by the retrieval target period of time receiving unit with reference to the report data storage unit,
wherein the retrieval result providing unit provides the user terminal with report data retrieved by the report data retrieving unit as a retrieval result.

3. The report data management server according to claim 1 or 2,
wherein the retrieval target period of time designation screen is provided with a display period of time unit selection region used to select a display period of time unit of the report data-related information display region,
the retrieval target period of time designation screen information generating unit specifies report data-related information according to a selected display period of time unit with reference to the report data storage unit as the display period of time unit is selected through the retrieval target period of time designation screen, and newly generates retrieval target period of time designation screen information including the report data-related information display region of the selected display period of time unit.

4. The report data management server according to claim 3,
wherein the report data-related information is decided according to a display period of time unit, and is information representing the presence or absence of report data to which a certain item is set in each specific period of time, information representing an aggregate result of report data to which a certain item is set in each specific period of time, or information representing at least some items of report data to which a certain item is set in each specific period of time.

5. The report data management server according to claim 3 or 4,
wherein the report data-related information display region is decided according to a display period of time unit, and is a display region of a calendar form configured with a calendar corresponding to a certain number of months or a display region on which report data-related information corresponding to a certain number of dates is displayed, and
the specific period of time region is decided according to a display period of time unit, and is a square corresponding to each date in a calendar or a square corresponding to each certain unit period of time.

6. A report data management program that operates enterprise resource planning (ERP) and causes a report data management server to execute a process of providing report data generated for each business unit in a business process via a communication network according to a request from a user terminal used by a user, the report data management program causing the report data management server including a report data storage unit storing the report data to execute:
a retrieval target period of time designation screen information generating process of generating retrieval target period of time designation screen information representing a retrieval target period of time designation screen used to designate a retrieval target period of time according to a request from the user terminal;
a retrieval target period of time designation screen providing process of providing the retrieval target period of time designation screen represented by the retrieval target period of time designation screen information;
a retrieval target period of time receiving process of receiving and accepting a retrieval target period of time designated through the retrieval target period of time designation screen from the user terminal; and
a retrieval result providing process of providing the user terminal with report data within a period of time represented by the retrieval target period of time received by the retrieval target period of time receiving unit as a retrieval result,
wherein the retrieval target period of time designation screen is provided with a report data-related information display region formed by a plurality of specific period of time regions divided in units of specific period of times, and report data-related information related to report data to which a certain item is set in a corresponding specific period of time is displayed on each specific period of time region, and
the retrieval target period of time designation screen information generating process includes a process of specifying the report data-related information with reference to the report data storage unit and generating the retrieval target period of time designation screen information representing the retrieval target period of time designation screen on which each specified report data-related information is displayed on each specific period of time region.
